(19) Europäisches Patentamt

European Patent Office

Office européen des brevets

(11) **EP 1 459 147 B1**

(12) **FASCICULE DE BREVET EUROPEEN**

(45) Date de publication et mention
de la délivrance du brevet:
**29.11.2006 Bulletin 2006/48**

(21) Numéro de dépôt: **02799802.0**

(22) Date de dépôt: **10.12.2002**

(51) Int Cl.:
***G05D 11/13*** *(2006.01)*

(86) Numéro de dépôt international:
**PCT/FR2002/004250**

(87) Numéro de publication internationale:
**WO 2003/050634 (19.06.2003 Gazette 2003/25)**

(54) **PROCEDE DE REGULATION DU TITRE D'UNE SOLUTION, DISPOSITIF DE COMMANDE DE CETTE REGULATION ET SYSTEME COMPORTANT UN TEL DISPOSITIF**

VERFAHREN ZUR KONZENTRATIONSREGELUNG EINER LÖSUNG, VORRICHTUNG ZUM KONTROLLIEREN DIESER REGELUNG, UND SYSTEM MIT EINER SOLCHEN VORRICHTUNG

METHOD FOR REGULATING THE TITER OF A SOLUTION, DEVICE FOR CONTROLLING SAID REGULATION AND SYSTEM COMPRISING SUCH A DEVICE

(84) Etats contractants désignés:
**AT BE BG CH CY CZ DE DK EE ES FI FR GB GR
IE IT LI LU MC NL PT SE SI SK TR**

(30) Priorité: **10.12.2001 FR 0115932**

(43) Date de publication de la demande:
**22.09.2004 Bulletin 2004/39**

(73) Titulaire: **Air Liquide Electronics Systems
75007 Paris (FR)**

(72) Inventeurs:
• **DULPHY, Hervé
38560 JARRIE (FR)**
• **MARTIN, Christophe,
Résidence le Square,
Entrée A
F-13090 Aix-en-Provence (FR)**

(74) Mandataire: **Vesin, Jacques et al
L'AIR LIQUIDE, S.A.,
Service Propriété Industrielle,
75, Quai d'Orsay
75321 Paris Cédex 07 (FR)**

(56) Documents cités:
**EP-A1- 0 881 555          WO-A1-99/53121
FR-A1- 2 811 240          TW-B- 409 312
US-A- 6 146 008          US-A1- 2002 001 850**

**Description**

**Domaine technique et art antérieur**

L'invention concerne le domaine de la régulation chimique, en particulier de slurries, ou composés de matière en suspension et/ou de divers produits chimiques (acide, base, composé organique) dans une solution.

De tels produits sont par exemple utilisés dans l'industrie des semi-conduteurs où ils servent à effectuer un polissage mécanique et chimique des wafers ou substrats semi-conducteurs.

Certains de ces slurries ou certaines de ces suspensions utilisent un composé dont la concentration diminue dans le temps, par exemple par décomposition par réaction chimique (c'est le cas de $H_2O_2$) ou par évaporation ($NH_4OH$).

Il faut donc dans ce cas réguler le titre en produit(s) chimique(s) ($H_2O_2$, $NH_4OH$) de ce slurry.

Il est connu de TW-B-409312 d'ajuster la concentration d'une solution contenant notamment un produit, en ajoutant de temps en temps une quantité de produit à la solution.

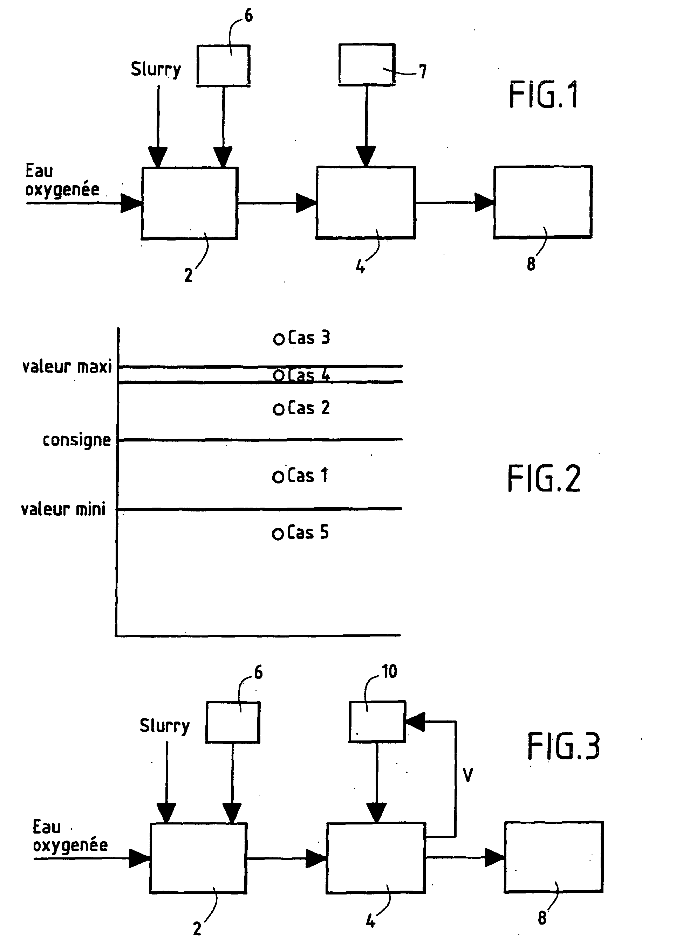

Les techniques actuelles de régulation des slurries mettent en oeuvre un fût tampon 4 et un fût de mélange 2, comme illustré schématiquement sur la figure 1. Les produits sortant du fût tampon sont ensuite amenés vers un système de distribution 8 et sont utilisés dans des opérations telles que les opérations de polissage mentionnées ci-dessus.

Le fonctionnement des fûts 2 et 4 peut être décrit dans le cas du $H_2O_2$

Les fûts 2, 4 fonctionnent entre un niveau haut ($Niveau_{max}$) et un niveau d'hystérésis qui déclenche le remplissage.

Ils sont régulés en titre $H_2O_2$ (% massique).

Le remplissage du fût tampon 4 se fait, lorsqu'il atteint le niveau d'hystérésis, avec du slurry qui provient du fût de mélange 2.

Le système de distribution de slurry est composé d'une boucle de circulation permanente telle que décrite dans le brevet US 6 125 876 qui évite que le slurry stagne dans le réseau et qui permet de réguler la pression aux équipements moyennant un capteur de pression. L'alimentation et le retour de cette boucle se trouvent en pied du fût tampon 4.

Le fût de mélange 2 est alimenté en slurry "pur" et en eau oxygénée (par exemple à 31%). Il est régulé en titre avant chaque transfert de produit vers le fût tampon 4.

Le titre d'eau oxygénée est régulé par ajout de $H_2O_2$ (31% massique).

Les opérations de titrage du fût tampon 4 sont réalisées à l'aide d'un titrateur 7 par potentiométrie ou parfois à l'aide de deux titrateurs.

Le titrateur effectue une mesure du titre de façon périodique (paramétrable). Son fonctionnement peut être décrit en liaison avec la figure 2. Sur cette figure apparaissent trois niveaux de titrage : un niveau haut (valeur maximum), un niveau bas (valeur minimum) et un niveau de consigne à atteindre.

Si le titre est inférieur à la consigne (cas 1 sur la figure 1), un réajustement est effectué par ajout de la quantité d'$H_2O_2$ manquante.

En cas de titre supérieur à la consigne (cas 2 et 4 sur la figure 1), aucune action de régulation n'est effectuée.

En cas de titre supérieur à la valeur maximale (cas 3 sur la figure 1), une deuxième vérification est effectuée. Si il est confirmé que le titre est trop haut, une alarme est déclenchée. Si le titre s'avère être normal après deuxième vérification, aucune action de régulation n'est effectuée.

En cas de titre inférieur à la valeur minimale (cas 5 sur la figure 1), une deuxième vérification est effectuée. Si il est confirmé que le titre est trop bas, une alarme est déclenchée. Si le titre s'avère être normal après deuxième vérification, aucune action de régulation n'est effectuée.

Le déclenchement d'une alarme résulte en un arrêt du système de distribution 8 et donc de la production.

Par ailleurs, chaque titrateur met notamment en oeuvre des éléments tels que des électrodes et des capillaires.

La mesure effectuée dépend en outre de réactifs de titration, ainsi que d'une éventuelle dérive des électrodes ou des capillaires. Les sources d'erreur sont donc nombreuses.

En outre, chaque titrateur représente en général un coût global égal à environ 10% du coût global de l'installation de production sur laquelle il est monté.

Chaque titrateur est également source de pannes et représente donc des coûts d'exploitation importants.

Il se pose le problème de trouver un nouveau système de régulation du titrage de suspensions, notamment dans le cadre de la préparation et des unités de production de wafers ou substrats semi-conducteurs, qui soit exempt des défauts évoqués ci-dessus.

Exposé de l'invention

L'invention propose un procédé de régulation du titre d'une solution, dans lequel une quantité prédéterminée d'un produit contenu dans la solution est ajoutée dans la solution selon un intervalle de temps proportionnel au produit du coefficient temporel D de dégradation dudit produit en solution et au volume total Vt de la solution au moment de l'ajout.

Ce procédé ne dépend que du calcul de l'intervalle d'ajout, qui ne dépend que de la mesure du volume total de la solution. Cette mesure peut être faite de manière analogique.

Le procédé selon l'invention est d'un coût bien inférieur au procédé mettant en oeuvre un titrateur, et n'est par ailleurs pas source de pannes, au contraire des titrateurs connus. Il ne met pas en oeuvre d'électrodes pouvant dériver et ne dépend pas non plus de réactifs de titration.

Après chaque ajout de produit, l'intervalle de temps avant l'injection suivante peut être calculé.

Ainsi, il est possible, après une certaine durée inférieure à l'intervalle d'ajout, de mesurer le volume total de la solution. Si ce volume n'a pas varié, la même quantité prédéterminée de produit est de nouveau injectée ou ajoutée. Si le volume total a diminué, un nouveau temps d'ajout est calculé, selon la même règle de calcul.

L'invention concerne également un dispositif de commande de la régulation du titre d'une solution, cette solution contenant un produit, comportant des moyens pour commander l'injection d'une quantité prédéterminée dudit produit dans ladite solution selon un intervalle de temps, dit intervalle d'ajout, proportionnel au produit du coefficient temporel D de dégradation dudit produit en solution et au volume total Vt de la solution au moment de l'ajout.

L'invention concerne également un système de régulation du titre d'une solution, comportant un dispositif tel que ci-dessus, et des moyens pour déterminer un volume de remplissage dans un récipient contenant ladite solution. Ces moyens pour déterminer un volume de remplissage peuvent être des moyens analogiques.

Un tel système de régulation peut en outre comporter un dispositif de titration à électrodes.

L'invention concerne également un système de production d'une solution chimique, comportant :

- un système de régulation tel que ci-dessus,
- des moyens de distribution de ladite solution.

Un système de production de substrats semi-conducteurs, selon l'invention, comporte une unité de polissage desdits substrats et un système de production d'une solution chimique de polissage tel que ci-dessus.

Brève description des figures

Les caractéristiques et avantages de l'invention apparaîtront mieux à la lecture de la description qui suit de plusieurs modes de réalisation donnés à titre d'exemples non limitatifs. La description se réfère aux figures annexées, sur lesquelles :

- la figure 1 représente un système de régulation connu,
- la figure 2 représente divers états de remplissage d'un fût,
- la figure 3 représente un système de régulation selon l'invention,
- la figure 4 représente des courbes de décomposition d'un produit dans un fût,
- la figure 5 représente un dispositif d'injection d'un produit, notamment dans un système selon l'invention.

Description détaillée de modes de réalisation de l'invention

La figure 3 représente le schéma d'un système de régulation selon l'invention. Ce schéma concerne, comme celui de la figure 1, la régulation des slurries (ou composés de matière en suspension et/ou de divers produits chimiques dans une solution) dans une unité de production de wafers ou de substrats semi-conducteurs. Les références 2, 4, 6, 8 désignent des éléments identiques ou équivalents à ceux de la figure 1.

Le tableau 1 ci-après résume les abréviations utilisées dans la présente description illustrée avec quelques valeurs numériques dans la colonne de droite (à titre non limitatif).

Indice :
- Initial : i
- Ajouté : aj
- Mesuré : mes
- Slurry : slur
- Mélange slurry eau ogygéné : m
- Fût de mélange : mel
- visé ou souhaité : vis
- pure : non dilué

| Paramètres | Définition | Unité valeurs | Type | Exemple de valeur |
|---|---|---|---|---|
| $Deg_{tamp}$ | Taux de dégradation de $H_2O_2$ dans le slurry dans le fût tampon | % $H_2O_2$/ Jour | Valeur mesurée sur la courbe | 0,189 %$H_2O_2$ /Jour |
| $Deg_{mel}$ | Taux de dégradation de $H_2O_2$ dans le slurry dans le fût de mélange | % $H_2O_2$/ Jour | Valeur mesurée sur la courbe | 0,189 %$H_2O_2$ /Jour |
| $Ecar_{mel}$ | Ecart maximum pour le fût de mélange entre la dernière analyse du titre en $H_2O_2$ et la nouvelle. | % $H_2O_2$ | Calcul | 0,06 % |
| $K$ /$K_{mel}$ / $K_{tampon}$ | coefficient d'ajout de la dose de 100 ml de $H_2O_2$ dans le slurry pour un fût (mélange / tampon) | % $H_2O_2$ | Calcul | 0,16 % |
| $M_{H2O2,aj}$ | Masse de $H_2O_2$ à ajouter dans le fût | Kg | Calcul | 523 Kg |
| $M_{slurry,j}$ | Masse de slurry dans le fût avant analyse | Kg | Mesure | 1123 Kg |
| $M_{slurry\ ajouté}$ | Masse de slurry à ajouter dans le fût | Kg | Calcul | 523 Kg |
| $M_{fût}$ | Poids maximum de slurry dans le fût | Kg | Paramètres | 1360 Kg |
| $Niveau_{max}$ | Niveau maximum admissible dans le fût | % de remplissage | Paramètres | 95 % |
| $Niveau_{utlle}$ | Niveau utile admissible dans le fût | % de remplissage | Paramètres | 90 % |
| $Niveau_{histé}$ | Plage de variation dans le fût de mélange / tampon | % de remplissage | Paramètres | 35 % |
| $Niveau_{mini}$ | Niveau minimum admissible dans le fût | % de remplissage | Paramètres | 60 % |
| $Niveau_{fût}$ | Niveau "actuel" dans le fût de mélange | % de remplissage | Mesure | 68 % |
| $Niveau_{slurry}$ | Niveau de slurry à ajouter dans le fût | % de remplissage | Calcul | 10 % |
| $Niveau_{H2O2}$ | Niveau de $H_2O_2$ à ajouter dans le fût | %.de remplissage | Calcul | 1% |
| $N_{tamp}$ | Nombre de puissance de l'agitation dans le fût tampon. | Nombre | Paramètres | -5_0 |

(suite)

| Paramètres | Définition | Unité valeurs | Type | Exemple de valeur |
|---|---|---|---|---|
| $n_{mel}$ | Nombre de puissance de l'agitation dans le fût de mélange. | Nombre | Paramètres | -5_0 |
| $N_{titration\ mel}$ | Nombre de titration successive pour le fût de mélange lors d'une analyse hors spécification avant de déclencher un défaut | Nombre | Paramètres | 1 - 4 |
| $Slurry_m$ | Mélange de slurry et de $H_2O_{2\ et}$ en spécification | | | |
| $Taux_{remplissage}$ | Niveau en % dans le fût | % | Mesure | 65.5 % |
| *Temps* $_{inter\ analyse}$ | Temps avant la nouvelle analyse du fût de mélange après un titre hors spécification. | Jour | valeur système | 2 jour |
| Temps $_{ajouts/analyse}$ | Détermine le temps entre la fin des ajouts d'$H_2O_2$ et l'analyse du titre en $H_2O_2$ dans le fût | Minutes | Paramètres | 40 min |
| $Temps_{inject\text{-}tampon}$ $Temps_{inject\text{-}mel}$ | Temps entre chaque nouvelle injection de H2O2 dans le fût pour les ajouts | Minutes dosés. | Valeur système | 35 min |
| *Tempsiject$_{mel}$* | Temps depuis dernière titration du fût de mélange . | Jour 0- 21 | Valeur système | Existant |
| $Titre_{H2O2pure}$ ou $Titre_{H2O2vis}$ | Titre souhaité (titre visé) en H2O2 dans le fût | % massique | Paramètres | 4,2 % |
| $Titre_{H2O2i}$ | Titre de H2O2 utiliser pour les ajouts | % massique | Paramètres | 31 % |
| $Titre_{H2O2mes}$ | Titre de H2O2 mesuré dans le fût | % massique | Paramètres | 4.18% |
| $Titre_{H2O2pure}$ | Titre de H2O2 utilisé à l'état pure, sans dilution | | | |

| | | | | |
|---|---|---|---|---|
| $Titre_{min}$ | Valeur minimale du Titre souhaité en H2O2 dans le fût. | % massique | Paramètres | 4.15% |
| $Titre_{max}$ | Valeur maximale du Titre souhaité en H2O2 dans le fût. | % massique | Paramètres | 4.25 % |

(suite)

| V1 | Volume exact de la dose d'injection de $H_2O_2$ 100 ml | Millilitres | Paramètres | 104 ml |
|---|---|---|---|---|
| V2 | Volume exact de la dose d'injection de $H_2O_2$ 900 ml | Millilitres | Paramètres. | 875 ml |
| V3 | Volume exact de la dose d'injection de $H_2O_2$ 9000 ml | Millilitres | Paramètres | 9012 ml |
| $V_{tamp}$ | Volume de $Slurry_m$ dans le fût tampon | % remplissage | Valeur système | 78 % système |
| $V_{total-tamp}$ | Volume de fût-volume de slurry | | | |
| | | | | |
| $Vol_{H2O2i}$ | volume de $H_2O_2$ concentré à ajouter dans le fût de mélange | Litres | Calcul | 65 litres |
| $Vol_{slurryajouté}$ | Volume mélange de slurry à ajouter dans le fût de | Litres | Calcul | 261 titres |
| $\rho_{H2O2i}$ | masse volumique de $H_2O_2$ utiliser pour les ajouts | $Kg/m^3$ | Valeur fixe | 1,11 $Kg/m^3$ |
| $\rho_{slurry}$ | masse volumique du slurry | $Kg/m^3$ | Valeur fixe | 1,043 $Kg/m^3$ |
| $K_{mel}$ | Dégradation théorique jour du titre en $H_2O_2$ dans le fût mélange pour un fût plein. | % $H_2O_2$/J 0 - 0,4 | Paramètres | Nouveau |

TABLEAU 1

Le fût tampon 4 est régulé de la manière suivante.

Une injection d'un volume prédéterminé (par exemple : 100 ml) est programmée à un intervalle de temps qui dépend de plusieurs paramètres:

1 - de K, coefficient d'ajout de la dose de 100 ml de $H_2O_2$ dans le slurry:

K dépend:

- du volume maximum dans le fût tampon
- du volume exact de la dose de $H_2O_2$ à ajouter ainsi que, en principe, de la vitesse d'agitation dans le fût.

2 - du volume dans le fût considéré au moment de l'ajout $V_{tamp} = V_{total-tamp} \cdot Taux_{remplissage}$
3 - du coefficient de dégradation journalier de $H_2O_2$ dans le fût $Deg_{tamp}$

Le temps entre deux injections pour le fût tampon est donné par:

$$Temps_{inject-tampon} = K \times Deg_{tamp} \times V_{tamp}$$

Un automate 10 (par exemple: un microcontroleur programmé) réalise le calcul, après chaque injection de $H_2O_2$, du délai avant la prochaine injection. Cet automate comporte des moyens de mémorisation des diverses données utilisées pour le calcul et un microprocesseur effectuant les calculs voulus et gérant et commandant les diverses injections de produit.

Par ailleurs, une mesure du volume dans le fût 4 est réalisée, par exemple par des moyens analogiques conventionnels.

A la fin du délai calculé, l'automate fait un test sur le nouveau volume mesuré dans le fût:

- Si il n'y a pas de changement de niveau (par exemple à +/-4%), il est procédé à l'injection de la dose prédéterminée,
- Si il y a diminution de niveau (il y a eu consommation de produit depuis le dernier ajout), l'automate recalcule le délai d'injection en fonction du nouveau volume. Le temps déjà écoulé est soustrait du nouveau délai, afin de déterminer à quel instant le nouvel ajout aura lieu.
- Lors d'un remplissage du fût tampon, l'opération d'ajout est initialisée à "temps = 0" et le calcul du temps est réeffectué en fonction du nouveau niveau (pas d'ajout à t = 0).

En fait, K dépend des spécifications du fût (hauteur, diamètre, volume) ainsi que de la vitesse d'agitation, tandis que le taux de dégradation Deg dépend lui-même de K et du rapport d'énergie volumique dissipé dans le slurry (en $W/m^3$).

Le coefficient K et la courbe de dégradation pour un fût donné sont déterminés de la manière suivante.

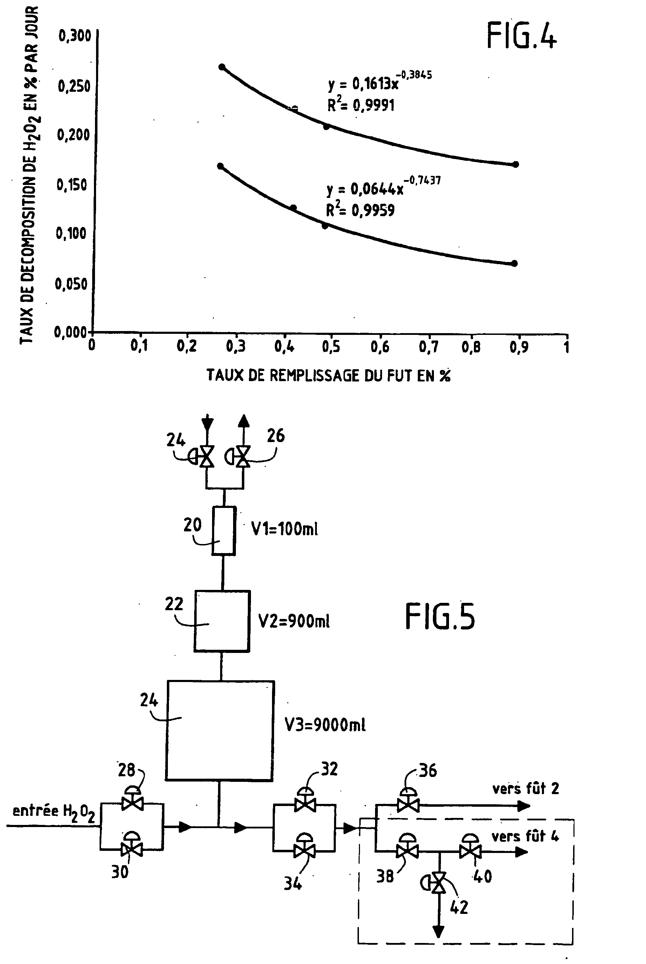

On effectue les mesures de dégradation de H2O2 en fonction du niveau dans le fût. On obtient alors une courbe du type de celles illustrées sur la figure 4.

La méthode utilisée est la suivante:

- Remplir le fût à 90% d'un mélange de slurry dont le titre en $H_2O_2$ est connu (environ 4.2%).
- Attendre 24 heures puis mesurer à nouveau le titre,
- Purger le fût pour faire varier le niveau et remettre le mélange au titre (environ 4.2%).
- Attendre 24 heures puis mesurer à nouveau le titre,
- Répéter plusieurs fois pour obtenir suffisamment de points.
- En déduire la courbe de décomposition de $H_2O_2$ dans le fût en fonction de son niveau de remplissage.

Le coefficient K est le coefficient de la fonction exponentielle trouvée. Ainsi, sur la figure 4, une courbe a pour coefficient K = 0,1613 et l'autre K = 0,0644.

La courbe donnant les variations du coefficient de dégradation D en fonction du taux de remplissage est identique ou similaire à celle exprimant les variations du coefficient de dégradation D en fonction d'une vitesse d'agitation pour un niveau fixe dans le fût. En effet, dans un cas on fait varier l'énergie (W) et dans l'autre le volume ($m^3$). Or ces deux variables sont du même ordre. Si on fait varier à la fois la vitesse d'agitation et le niveau dans le fût, on obtient une représentation sous forme d'isoniveaux, donc avec plusieurs courbes. Dans tous les cas, ces variables ne dépendent pas de la dose de H2O2.

Afin d'ajouter un degré de sécurité supplémentaire au système décrit ci-dessus, on peut également ajouter une mesure par un titrateur conventionnel ou à électrodes.

L'ajout de H2O2 est alors toujours effectué comme il vient décrit ci-dessus, mais une analyse régulière par le titrateur permet de valider la mesure.

Le fonctionnement est alors le suivant, les différents cas étant ceux de la figure 2 :

**Cas 1 :** En cas de titre inférieur à la consigne : réajustement comme en mode de régulation par le titrateur (déjà décrit ci-dessus dans l'introduction).

**Cas 2 :** En cas de titre supérieur à la consigne : aucune action

**Cas 3 :** En cas de titre supérieur à la valeur Max, une deuxième mesure est effectuée:

- Si il est confirmé que le titre est trop haut: une alarme est déclenchée, et il y arrêt des ajouts.
- Si le titre apparaît normal à la deuxième mesure, aucune action n'est entreprise.

**Cas 4 :** En cas de titre proche de la valeur Max (par exemple supérieur à la valeur Max-0.01%) : une deuxième mesure est effectuée:

- Si il est confirmé que le titre est trop haut: une alarme est déclenchée, et il y arrêt des ajouts.
- Si le titre apparaît normal à la deuxième mesure, aucune action n'est entreprise.

**Cas 5 :** En cas de titre inférieur à la valeur Min : une deuxième mesure est effectuée:

- Si il est confirmé que le titre est trop bas : une alarme est déclenchée, et le titre est ajusté.
- Si le titre apparaît normal à la deuxième mesure, aucune action n'est entreprise.

Ce qui vient d'être décrit concerne le fût tampon 4.

Le fût de mélange 2 est régulé en titre $H_2O_2$ (% massique) avant chaque remplissage du fût tampon et en remplissage (%) après chaque transfert vers le fût tampon 4.

Le remplissage de ce fût 2 et sa mise au titre ont lieu de la manière suivante.

Un mélange est tout d'abord préparé. Le niveau dans le fût 2 est maintenu entre :

- 

$$\text{un niveau Niveau}_{mini} = \text{Niveau}_{max} - \text{Niveau}_{hysté} \quad (F1)$$

- 

$$\text{et un niveau Niveau}_{utile} = \text{Niveau}_{max} * 0.95 \quad (F2)$$

où 0,95 est un coefficient de sécurité qui permet les ajustements du titre en H2O2 sans dépasser le niveau haut dans le fût de mélange.

Le niveau dans le fût diminue lors du transfert du $slurry_{mel}$ du fût de mélange 2 vers le fût tampon 4. Il est remis à niveau après chaque remplissage si le niveau final dans le fût de mélange 2 atteint la valeur : $\text{Niveau}_{min}$

La préparation du produit dans le fût mélange 2 se fait avec le $Slurry_p$ (slurry "pur" sans $H_2O_2$) et de l'eau oxygénée à 31% massique.

Cette préparation se fait de façon à obtenir un niveau dans le fût de mélange tel que :

$$\text{Niveau}_{max} * 0.95 = (\text{Niveau}_{inital} + \text{Niveau}_{slurry} + \text{Niveau}_{H2O2}) \, (F3)$$

Le calcul de $H_2O_2$ à ajouter lors d'un remplissage du fût de mélange 2 se fait en utilisant la formule (F4) suivante:

$$\text{Titre}_{H2O2} = \text{Vol}_{H2O2i} * \rho_{H2O2i} * \text{titre}_{H2O2i} / (\text{Vol}_{H2O2i} * \rho_{H2O2i} + \text{Vol}_{slurry\ ajouté} * \rho_{slurry}).$$

On obtient alors la formule suivante pour le calcul du peroxyde d'hydrogène à ajouter dans le fût de mélange:

$$M_{H2O2,aj} = M_{slurry,i} * \text{Titre}_{H2O2,vis} / (\text{Titre}_{H2O2i} - \text{Titre}_{H2O2,vis}) \quad (F5)$$

Pratiquement, les différentes étapes de remplissage se déroulent de la manière suivante :

1) Il y a d'abord rinçage de la ligne de remplissage du fût de mélange avec le slurry ( temporisation).
2) Puis il y a remplissage du fût avec le slurry : $M_{slurry}$ ajouté selon la formule (F6) :

$$M_{slurryaj} = M_{fût} *( \text{Niveau}_{max} * 0.95 - \text{Niveau}_{inital} ) * \text{Titre}_{H2O2vis} / (\text{Titre}_{H2O2i} - \text{Titre}_{H2O2vis} )$$

3) Il est ensuite procédé au rinçage de la ligne de remplissage du fût de mélange avec de l'EDI (tempo).
4) La vanne de remplissage du fût de mélange est ensuite rincée avec de l'EDI (tempo).
5) Il est ensuite procédé au remplissage du fût avec de H2O2 ( $M_{H2O2aj}$) avec:

$$M_{H2O2aj} = M_{fût} *( \text{Niveau}_{max} * 0.95 - \text{Niveau}_{inital} ) * \text{Titre}_{H2O2pure} / \text{Titre}_{H2O2} )$$

6) Attente pendant l'homogénéisation du fût de mélange (durée d'attente = $\text{Temps}_{ajouts/analyse}$).
7) Le fût de mélange est ensuite analysé, on en obtient le titre obtenu: $\text{Titre}_{H2O2mes}$

- si $\text{Titre}_{min} \leq \text{Titre}_{H2O2mes} \leq \text{Titre}_{max}$ validation du fût de mélange, passer à l'étage 10)
- si $\text{Titre}_{H2O2mes} > \text{Titre}_{max}$ :

- Faire une autre analyse pour confirmation (**N**$_{\text{titration mel}}$)
- Si confirmation, une alarme est déclenchée et une demande d'intervention d'un opérateur est formulée.

- si Titre$_{\text{H2O2mes}}$ < Titre$_{\text{min}}$ : Il y a ajustement du titre, puis passage à l'étage 8)

- Vérifier que Titre$_{\text{H2O2vis}}$ - Titre$_{\text{H2O2mes}}$ < Ecar$_{\text{mel}}$ (où Ecar$_{\text{mel}}$ est l'écart maximum pour le fût de mélange entre la dernière analyse du titre en $H_2O_2$ et la nouvelle).
- Faire une autre analyse pour confirmation (**N**$_{\text{titration mel}}$)

8) Le titre est ensuite ajusté, les étapes d'ajustement étant les suivantes:

- Calcul du volume de H2O2 à ajouter en utilisant la formule (F8)
- Ajout H2O2 pour ajustement (suite à la dégradation du titre en H2O2).
- Attente pendant l'homogénéisation du fût de mélange (durée d'attente = **Temps ajouts / analyse**).

9) Le fût de mélange est analysé pour confirmation du titre en spécification,
10) Il y a ensuite attente de demande de remplissage du fût tampon.

La régulation en titre du fût 2 a lieu de la manière suivante. En fait, avec la même méthode de calcul, on calcule la masse de peroxyde d'hydrogène à ajouter dans le fût de mélange 2 pour la régulation du titre :

$$M_{\text{H2O2,aj}} = M_{\text{slurry,i}} * (\text{Titre}_{\text{H2O2,vis}} - \text{Titre}_{\text{H2O2,mes}}) / (\text{Titre}_{\text{H2O2i}} - \text{Titre}_{\text{H2O2,vis}})$$

Les étapes successives sont ensuite les suivantes :

1) Analyse du fût de mélange. D'où titre obtenu: Titre$_{\text{H2O2vis}}$

- si Titre$_{\text{min}}$ ≤ Titre$_{\text{H2O2mes}}$ ≤ Titre$_{\text{max}}$ validation du fût de mélange, et on passe à l'étape 10
- si Titre$_{\text{H2O2mes}}$ > Titre$_{\text{max}}$ :

- Faire une autre analyse pour confirmation (**N**$_{\text{titration mel}}$)
- Si confirmation, alarme et demande d'intervention d'un opérateur.

- si Titre$_{\text{H2O2mes}}$ < Titre$_{\text{min}}$ : Ajustement du titre, et passer à l'étape 8)

- Vérifier ensuite que Titre$_{\text{H2O2vis}}$ - Titre$_{\text{H2O2mes}}$ < Ecar$_{\text{mel}}$ (où Ecar$_{\text{mel}}$ est l'écart maximum pour le fût de mélange entre la dernière analyse du titre en $H_2O_2$ et la nouvelle).
- Faire une autre analyse pour confirmation (**N**$_{\text{titration mel}}$)

2) Ajustement du titre

- Calcul du volume de H2O2 à ajouter en utilisant la formule (F8),
- Ajout H2O2 pour ajustement (suite à la dégradation du titre en H2O2),
- Attente pendant l'homogénéisation du fût de mélange (durée d'attente **Temps $_{\text{ajouts/analyse}}$**).

3) Analyse du fût de mélange pour confirmation du titre en spécification.
4) Attente de demande de remplissage du fût tampon.

Le fût tampon 4, quant à lui, est régulé en permanence en titre H2O2 (%massique) et en remplissage (%).
Le niveau dans le fût est maintenu entre

- un niveau Niveau$_{\text{mini}}$ = Niveau$_{\text{max}}$ - Niveau$_{\text{hysté}}$ (F1)
- et un niveau Niveau$_{\text{utile}}$ = Niveau$_{\text{max}}$ * 0.95 (F2)

où 0,95 est un coefficient de sécurité qui permet les ajustements du titre en $H_2O_2$ sans dépasser le niveau haut dans le fût de mélange

Le niveau dans le fût 4 diminue lors de consommation de produit par les équipements.

Il est alors rempli avec le $Slurry_m$ qui provient du fût de mélange 2 dès que son niveau passe en dessous du niveau $Niveau_{hysté}$.

Le déroulement des étapes de remplissage est le suivant:

1) Demande de remplissage au fût de mélange 2.

2)

- Fût de mélange 2 non-prêt : mise en attente.
- Fût de mélange 2 prêt : aller en étape 3)

3) Rinçage de la ligne de remplissage du fût tampon avec le $Slurry_m$, puis remplissage du fût tampon avec le $slurry_m$ jusqu'au niveau $Niveau_{max}$ * 0.95

4) Rinçage de la ligne de remplissage du fût de mélange avec de l'EDI (tempo).

La formule de régulation du titre dans le fût tampon 4, qui permet de calculer la quantité d'eau oxygénée à ajouter, est la même que dans le fût de mélange:

$$M_{H2O2,aj} = M_{slurry,i} * (Titre_{H2O2,vis} - Titre_{H2O2,mes}) / (Titre_{H2O2i} - Titre_{H2O2,vis})$$

L'eau oxygénée est ajoutée par l'intermédiaire de capacités de dosage sur le retour du produit dans le fût tampon.

Un système de vanne appelé "block and bleed" permet de faire des ajouts d'eau oxygénée tous en préservant le fût de fuites en ligne éventuelles qui ajouteraient de l'eau oxygénée dans le fût tampon lors du remplissage du fût de mélange en peroxyde.

La régulation du titre a lieu selon la méthode déjà exposée ci-dessus.

La titration du fût de mélange 2 a lieu, quant à elle, de la manière suivante. La valeur admissible sur l'écart entre deux analyses du fut mélange est fonction d'un paramètre : $Deg_{me}$ (taux de dégradation du titre $H_2O_2$).

Le taux de dégradation du titre $H_2O_2$ dans le fût de mélange 2 est lui-même fonction de l'agitation dans le fût et du niveau dans le fût.

En effet, si la vitesse d'agitation dans le fût est constante, l'énergie dissipée par unité de volume est variable. Par conséquent, la vitesse de dégradation dans le fût est fonction de son niveau en slurry.

La courbe de dégradation est donc une courbe de puissance (typique des phénomènes d'agitation).

On peut donc estimer la perte de titre en H2O2 dans le fût entre deux analyses :

- Ecart fût mélange en % = $Ecar_{mel}$
- Dégradation fût mélange en % / par jour = $Deg_{mel}$
- Avec $Deg_{mel} = K_{mel} * (Niveau_{fût mél})^{nmel}$
- Temps depuis dernière titration en jour = $Temps_{injectmel}$

$$Ecar_{mel} = Deg_{mel} \times Temps_{iject-mel}$$

Si une analyse du titre révèle que le titre est trop bas dans le fût de mélange 2 ($Titre_{H2O2vis}$ - $Titre_{H2O2mes}$ < $Ecar_{mel}$) le système déclenche une remise au titre par ajout de $H_2O_2$.

Si une analyse révèle que le titre est trop haut dans le fût de mélange, le système déclenche, après confirmation successive, une alarme « titre trop haut fût de mélange » qui disparaît lorsque le titre redevient normal.

Une autre analyse du fût se fait après un *Temps inter analyse* qui se calcule comme suit:

$$Temps_{interanalyse} = Ecar_{mel} / Deg_{mel}$$

S'il y a alarme titration:

Lors d'une analyse du titre, si la valeur est telle que $Titre_{H2O2vis}$ - $Titre_{H2O2mes}$ > $Ecar_{mel}$, le système déclenche (après $N_{titration\ mel}$ confirmations successives) une alarme et demande l'intervention d'un opérateur

Une erreur de titration sur le fût de mélange ne doit pas stopper le système, il doit seulement générer un défaut mineur (pendant H heures, paramètre pouvant être modifié) puis défaut majeur après H heures s'il n'y a pas eu d'intervention de l'opérateur.

Les ajouts de H202 se font en utilisant un système de capacités qui est rempli en produit avec une mise à la pression atmosphérique puis pressurisée pour remplir l'un des deux fûts (tampon ou mélange).

Ce montage illustré sur la figure 5 est composé de 3 capacités successives 20, 22, 24, de volume connu à un millilitre près:

- Une première capacité 20 d'un volume d'environ V1 = 100 ml, connu exactement.
- Une deuxième capacité 22 d'un volume d'environ V2 = 900 ml, connu exactement.
- Une troisième capacité 24 d'un volume d'environ V3 = 9000 ml, connu exactement.

Exemple d'utilisation pour un volume de 11, 3 litres de H2O2:

- Remplissage des capacités,
- Vidange jusqu'au niveau 10000 millilitres (V1 + V2 +V3),
- Remplissage des capacités,
- Vidange jusqu'au niveau 1000 millilitres (V1+ V2),
- Remplissage des capacités,
- Vidange jusqu'au niveau 100 millilitres (V1),
- Remplissage des capacités,
- Vidange jusqu'au niveau 100 millilitres (V1),
- Remplissage des capacités,
- Vidange jusqu'au niveau 100 millilitres (V1).

En réalité les volumes V1, V2 et V3 ne sont pas des multiples exacts de cent millilitres, le programme de l'automate 10 en tient compte lors du calcul des doses à ajouter.

Sur la figure 5, les références 24 et 26 désignent des vannes respectivement sur une voie de pressurisation et sur une voie de mise à l'air. Les vannes 32 et 34 sont des vannes respectivement d'ajout rapide et d'ajout lent (par un orifice calibré). Le produit est ensuite dirigé vers le fût 2 (vanne 36) ou le fût 4 (vannes 38 et 40), ou encore vers une voie de drainage via une vanne 42.

Le procédé de régulation selon l'invention s'applique notamment à la gestion du titre d'une solution chimique de polissage de substrats semi-conducteurs.

Un système de régulation selon l'invention fournit donc un produit de polissage à des moyens de distribution. Le produit est ensuite distribué à une unité de polissage des substrats.

**Revendications**

1. Procédé de régulation du titre d'une solution, dans lequel une quantité prédéterminée d'un produit contenu dans la solution est ajoutée dans la solution **caractérisé en ce que** ladite quantité est ajoutée selon un intervalle de temps, dit intervalle d'ajout, proportionnel au produit du coefficient temporel D de dégradation dudit produit en solution et au volume total Vt de la solution au moment de l'ajout.

2. Procédé selon la revendication 1, dans lequel, après chaque ajout de produit, l'intervalle de temps avant l'injection suivante est calculé.

3. Procédé selon la revendication 2, dans lequel, après une certaine durée inférieure à l'intervalle d'ajout, le volume total de la solution est mesuré.

4. Procédé selon la revendication 3, dans lequel, si le volume total a diminué, un nouveau temps d'ajout est calculé.

5. Procédé selon l'une des revendications 1 à 4, l'intervalle d'ajout étant égal à K x D x Vt, où K est un coefficient qui dépend de la vitesse d'agitation de la solution et des caractéristiques géométriques d'un récipient contenant ladite solution.

**6.** Procédé selon l'une des revendications précédentes, dans lequel on effectue préalablement une mesure du taux de dégradation dudit produit en solution, en fonction du taux de remplissage d'un récipient par ladite solution et/ou de la vitesse d'agitation dans ledit récipient.

**7.** Procédé selon l'une des revendications 1 à 6, comportant en outre une détermination du titre de la solution par un titrateur à électrodes.

**8.** Procédé selon la revendication 7, comportant le déclenchement d'une alarme lorsque le titre mesuré par le titrateur à électrodes est inférieur à une valeur minimum prédéterminée ou est supérieur à une valeur maximum prédéterminée.

**9.** Procédé selon la revendication 8, dans lequel on réalise, avant déclenchement de l'alarme, au moins deux mesures successives par le titrateur à électrodes, lorsqu'une mesure par ce titrateur est inférieure à ladite valeur maximum.

**10.** Procédé selon l'une des revendications 1 à 9, dans lequel la solution est une solution de polissage de substrats semi-conducteurs.

**11.** Procédé de polissage de substrats semi-conducteurs, comportant l'utilisation d'une solution régulée par un procédé selon l'une des revendications 1 à 10.

**12.** Dispositif de commande de la régulation du titre d'une solution, cette solution contenant un produit, comportant des moyens (10) pour commander l'injection d'une quantité du produit, **caractérisée en ce que** lesdits moyens (10) sont des moyens pour commander l'injection d'une quantité prédéterminée dudit produit dans ladite solution selon un intervalle de temps, dit intervalle d'ajout, proportionnel au produit du coefficient temporel D de dégradation dudit produit en solution et au volume total Vt de la solution au moment de l'ajout.

**13.** Dispositif selon la revendication 12, comportant en outre des moyens (10) pour déterminer, après chaque ajout de produit, l'intervalle de temps avant l'injection suivante.

**14.** Système de régulation du titre d'une solution, comportant un dispositif selon l'une des revendications 12 ou 13, et des moyens pour déterminer un volume de remplissage dans un récipient contenant ladite solution.

**15.** Système selon la revendication 14, les moyens pour déterminer un volume de remplissage étant des moyens analogiques.

**16.** Système de régulation selon la revendication 14 ou 15, comportant en outre un dispositif de titration à électrodes.

**17.** Système de production d'une solution chimique, comportant :

- un système de régulation selon l'une des revendications 14 à 16,
- des moyens (8) de distribution de ladite solution.

**18.** Système de production de substrats semi-conducteurs, comportant une unité de polissage desdits substrats et un système de production d'une solution chimique de polissage selon la revendication 17.

**Claims**

**1.** Method for regulating the titre of a solution, in which a predetermined amount of a product contained in the solution is added to the solution, **characterized in that** the said amount is added according to a time interval, called the addition interval, proportional to the product of the delayral degradation coefficient D of the said product in solution and the total volume Vt of the solution at the time of the addition.

**2.** Method according to Claim 1, in which, after each addition of product, the time interval before the next injection is calculated.

**3.** Method according to Claim 2, in which, after a certain period of time less than the addition interval, the total volume of the solution is measured.

**4.** Method according to Claim 3, in which, if the total volume has decreased, a new addition time is calculated.

**5.** Method according to one of Claims 1 to 4, the addition interval being equal to K × D × Vt, where K is a coefficient that depends on the solution stirring speed and on the geometrical characteristics of a container containing the said solution.

**6.** Method according to one of the preceding claims, in which the degradation coefficient of the said product in solution is measured beforehand according to the degree of filling of a container with the said solution and/or the stirring rate in the said container.

**7.** Method according to one of Claims 1 to 6, which furthermore includes a determination of the titre of the solution by an electrode titrator.

**8.** Method according to Claim 7, which includes the triggering of an alarm when the titre measured by the electrode titrator is below a predetermined minimum value or is above a predetermined maximum value.

**9.** Method according to Claim 8, in which, before the alarm is triggered, at least two successive measurements are made by the electrode titrator when a measurement by this titrator is below the said maximum value.

**10.** Method according to one of Claims 1 to 9, in which the solution is a solution for polishing semiconductor substrates.

**11.** Process for polishing semiconductor substrates, comprising the use of a solution regulated by a method according to one of Claims 1 to 10.

**12.** Device for controlling the regulation of the titre of a solution, this solution containing a product, comprising means (10) for controlling the injection of an amount of the product, **characterized in that** the said means (10) are means for controlling the injection of a predetermined amount of the said product into the said solution according to a time interval, called the addition interval, proportional to the product of the delayral degradation coefficient D of the said product in solution and the total volume Vt of the solution at the time of the addition.

**13.** Device according to Claim 12, which furthermore includes means (10) for determining, after each addition of product, the time interval before the next injection.

**14.** System for regulating the titre of a solution, which comprises a device according to either of Claims 12 and 13 and means for determining a fill volume in a container containing the said solution.

**15.** System according to Claim 14, the means for determining a fill volume being analogue means.

**16.** Regulating system according to Claim 14 or 15, which furthermore includes an electrode titration device.

**17.** System for producing a chemical solution, comprising:

- a regulating system according to one of Claims 14 to 16; and
- means (8) for delivering the said solution.

**18.** System for producing semiconductor substrates, which includes a unit for polishing the said substrates and a system for producing a chemical polishing solution according to Claim 17.

**Patentansprüche**

**1.** Verfahren zur Regulierung der Titration einer Lösung, wobei eine festgelegten Menge eines Produkts, das in einer Lösung enthalten ist, der Lösung zugegeben wird, **dadurch gekennzeichnet, dass** die Menge gemäß einem Zeitintervall zugegeben wird, wobei dieses Zugabeintervall proportional zum Produkt des Degradationszeitkoeffizienten D des Produkts in Lösung und zum Gesamtvolumen Vt der Lösung zum Zeitpunkt der Zugabe ist.

**2.** Verfahren nach Anspruch 1, wobei nach jeder Zugabe des Produkts das Zeitintervall vor der nächsten Injektion berechnet wird.

3. Verfahren nach Anspruch 2, wobei das Gesamtvolumen der Lösung nach einer bestimmten Zeitspanne, die geringer ist als das Zugabeintervall, gemessen wird.

4. Verfahren nach Anspruch 3, wobei eine neue Zugabezeit berechnet wird, wenn sich das Gesamtvolumen verringert hat.

5. Verfahren nach einem der Ansprüche 1 bis 4, wobei das Zugabeintervall K x D x Vt ist, worin K ein Koeffizient ist, der eine Funktion der Rührgeschwindigkeit der Lösung und der geometrischen Merkmalen des Behälters ist, der die Lösung enthält.

6. Verfahren nach einem der vorausgehenden Ansprüche, bei dem eine Messung des Degradationskoeffizienten des Produkts in Lösung im Voraus gemäß dem Füllgrad des Behälters mit der Lösung und/oder der Rührgeschwindigkeit im Behälter durchgeführt wird.

7. Verfahren nach einem der Ansprüche 1 bis 6, das ferner die Analyse der Titration der Lösung mittels eines Elektrodentitrators umfasst.

8. Verfahren nach Anspruch 7, das das Auslösen eines Alarms umfasst, wenn die mit dem Elektrodentitrator gemessene Titration unter einem festgelegten Mindestwert oder über einem festgelegten Maximalwert liegt.

9. Verfahren nach Anspruch 8, wobei vor dem Auslösen des Alarms mindestens zwei aufeinander folgende Messungen mittels des Elektrodentitrators ausgeführt werden, wenn eine Messung dieses Titrators unter dem Maximalwert liegt.

10. Verfahren nach einem der Ansprüche 1 bis 9, wobei die Lösung eine Lösung zum Polieren von Halbleitersubstraten ist.

11. Verfahren zum Polieren von Halbleitersubstraten, das die Verwendung einer Lösung umfasst, die mittels des Verfahrens nach einem der Ansprüche 1 bis 10 reguliert ist.

12. Vorrichtung zum Kontrollieren der Regulierung der Titration einer Lösung, wobei diese Lösung ein Produkt enthält, das Mittel (10) zur Kontrolle der Injektion einer Menge des Produkts umfasst, **dadurch gekennzeichnet, dass** diese Mittel (10) Mittel zur Kontrolle der Injektion einer festgelegten Menge des Produkts in die Lösung gemäß einem Zeitintervall sind, wobei dieses Zugabeintervall proportional zum Produkt des Degradationszeitkoeffizienten D des Produkts in Lösung und zum Gesamtvolumen Vt der Lösung zum Zeitpunkt der Zugabe ist.

13. Vorrichtung nach Anspruch 12, das ferner Mittel (10) zur Analyse des Zeitintervalls vor der nächsten Injektion nach jeder Zugabe des Produkts umfasst.

14. System zur Regulierung der Titration einer Lösung, das eine Vorrichtung gemäß einem der Ansprüche 12 oder 13 und Mittel zur Analyse eines Füllvolumens in einem Behälter umfasst, der die Lösung enthält.

15. System nach Anspruch 14, wobei die Mittel zur Analyse des Füllvolumen analoge Mittel sind.

16. Regulierungssystem nach Anspruch 14 oder 15, das ferner eine Elektrodentitrationsvorrichtung umfasst.

17. System zur Herstellung einer chemischen Lösung, umfassend:

   - ein System zur Regulierung nach einem der Ansprüche 14 bis 16,
   - Mittel (8) zur Verteilung der Lösung.

18. System zur Herstellung von Halbleitersubstraten, das eine Einheit zum Polieren der Substrate und ein System zur Herstellung einer chemischen Polierlösung nach Anspruch 17 umfasst.

Slurry

Eau
oxygenée

2

6

7

**FIG.1**

8

4

valeur maxi

consigne

valeur mini

o Cas 3

o Cas 4

o Cas 2

o Cas 1

o Cas 5

**FIG.2**

Slurry

Eau
oxygenée

2

6

10

V

**FIG.3**

4

8

# FIG.4

TAUX DE DECOMPOSITION DE $H_2O_2$ EN % PAR JOUR

$y = 0,1613x^{-0,3845}$
$R^2 = 0,9991$

$y = 0,0644x^{-0,7437}$
$R^2 = 0,9959$

TAUX DE REMPLISSAGE DU FUT EN %

# FIG.5

24   26

20   V1=100ml

22   V2=900ml

24   V3=9000ml

28   32   36   vers fût 2

entrée $H_2O_2$   vers fût 4

30   34   38   40

42